(19) **Europäisches Patentamt**

**European Patent Office**

**Office européen des brevets**

(11) Publication number: **0 036 700**
**A1**

(12) # EUROPEAN PATENT APPLICATION

(21) Application number: **81300291.2**

(22) Date of filing: **22.01.81**

(51) Int. Cl.³: **C 04 B 17/00**

(30) Priority: **20.03.80 AR 280370**

(43) Date of publication of application: **30.09.81**
**Bulletin 81/39**

(84) Designated Contracting States: **AT BE CH DE FR GB IT LI LU NL SE**

(71) Applicant: **ESTABLECIMIENTOS JUNIN S.A., Hipolito yrigoyen 1782 2nd Floor, Capital Federal (AR)**

(72) Inventor: **Valerio, Ricardo Antonio, Moreno 3021, Capital Federal (AR)**

(74) Representative: **Allard, Susan Joyce et al, BOULT, WADE & TENNANT 27 Furnival street, London EC4A 1PQ (GB)**

(54) **Cold hardening composition, process for producing it, and its use.**

(57) A composition for the cold hardening or conglutination of materials, which comprises a liquid component formed by a neutral aqueous solution of a chloride of magnesium or calcium, stabilised with an aqueous solution of a sulphate of the same metal and a solid component formed by an oxide of the metal corresponding to the chloride and sulphate.

EP 0 036 700 A1

A COMPOSITION FOR THE COLD HARDENING OR CONGLUTINATION OF MATERIALS, PROCESS FOR THE PREPARATION THEREOF AND USE THEREOF

The present invention relates to a composition for the cold hardening or conglutination of materials, in particular those used in building, such as wood, expanded synthetic products, natural and synthetic fibres or minerals in powdered or fragmentary form, which composition has clear advantages over its known counterparts used in the above-mentioned field. A process for the preparation of this composition is additionally included within the scope of the invention.

In many industries, particularly in the building industry, it is frequently necessary for such materials to undergo hardening for the purpose of increasing their mechanical strength and also their resistance to the action of atmospheric agents, thus obtaining improved efficiency in their utilisation. Likewise, in many instances it is necessary to conglutinate various materials found in a powdered or fragmentary state, so as to obtain blocks or the like which can generally be used in the building industry, it being necessary for these artificially made blocks to have the characteristics of mechanical strength and

2.

0036700

resistance to atmospheric agents exhibited by blocks of natural origin.

However, compositions which are used at present to obtain the aforementioned hardened or conglutinated materials suffer from both technical and economic disadvantages which affect their efficiency and applicability.

In view of this situation, it has become necessary to provide a new composition which will satisfy in a particularly outstanding manner the technical requirements of these materials and which, at the same time, will be economically advantageous.

Accordingly, the present invention provides a composition for the cold hardening or conglutination of materials, which comprises a liquid component formed by a neutral aqueous solution of a chloride of magnesium or calcium, stabilised with an aqueous solution of a sulphate of the same metal and a solid component formed by an oxide of the metal corresponding to the chloride and sulphate.

The chloride used in this composition is preferably analytically pure and the water used to obtain the corresponding solutions is preferably chemically pure and free of salts.

The above-mentioned constituents of the composition of this invention are preferably present in the composition within the following proportions:

| | |
|---|---|
| magnesium or calcium chloride | 600-800 parts by weight |
| water | 900-1100 parts by weight |
| aqueous solution of magnesium or calcium sulphate | 5-15 parts by weight |
| magnesium or calcium oxide | 900-1100 parts by weight |

The product of the present invention may be prepared using a process which comprises the following stages:

A) dissolving analytically pure magnesium or calcium chloride in chemically pure water;

B) leaving the resultant solution to stand for at least 24 hours;

C) adding to this solution a solution of analytically pure magensium sulphate in chemically pure water;

D) stirring the resultant solution and leaving it to stand for a period of not less than 4 hours; and at the end of this period, filtering and incorporating powdered magnesium or calcium oxide into the filtrate.

To enable the present invention to be readily understood, one example of the preparation of a composition in accordance with the present invention is given below, solely by way of illustration.

EXAMPLE

700 g of analytically pure crystallised magnesium chloride were poured slowly into and dissolved in 1000 cc of chemically pure water. Once the chloride was completely

4.

0036700

dissolved the resultant solution was left to stand for a period of not less than 24 hours, after which 10 cc of a solution of 5 g of analytically pure magnesium sulphate in 10 cc of chemically pure water were added thereto.

The resultant solution was stirred and was left to stand for a period of not less than 4 hours, at the end of which it was then filtered and 1000 g of analytically pure calcined magnesium oxide were added to the filtrate; thus providing a composition ready for use in the hardening and/or conglutination of materials.

The same results were obtained using analytically pure calcium chloride instead of magensium chloride, the magnesium sulphate and magnesium oxide also being replaced by calcium sulphate and calcium oxide, respectively, which were used in the same amounts as specified above.

The composition of the present invention may be used to cause the hardening and/or conglutination of various materials among which may be mentioned; volcanic lava, chalk, quartz, talc, carborundum, aluminium oxide, zinc oxide, sawdust and vegetable fibres in general, cork sawdust, pulverised or fragmentary charcoal or coal, paper in general, powdered or fragmentary hide, peat, calcium carbonate, vermiculite, expanded clay, expanded polystyrene, sands, pulverised glass, brick dust, powdered crude or fired kaolins, pure iron slags,

5.

0036700

cotton waste, textile waste in general, cereal husks in general, glass fleece and glass fibres, powdered or fragmentary iron oxide, powdered or fragmentary lead oxide, ferrites, pulverised or fragmentary granites and any type of calcic, granitic or calcerous stones, powdered micas and clays in general.

The foregoing list of materials, to which the composition of the present invention may be applied, is merely given by way of example, since the field of application of this composition is extremely broad. It is thus possible to apply the composition to all those materials to which it is desired to impart the properties of hardness and/or conglutination which enables them to be used in those industries in which an increased mechanical strength and resistance to atmopsheric agents are required.

By way of illustration, the following may be mentioned as materials treated with the composition of the present invention; covering and linings in general, panels for partitions in houses/rooms, floors, roofing tiles, slates, piles, posts, board poles, tables, frames for doors and windows, special rods, substitutes of all types where wood is used, sanitary fittings in general, panels for Australian tanks, sheets and plates for roofing or for the construction of silos, bridge structures, hulls for boats, pipes for chimneys, refractory bricks, bricks of ceramic and non-

0036700

ceramic type, roofing slabs, flat and corrugated sheets in general, handles for domestic utensils in general, imitation marble, etc.

It should be pointed out that the composition of the present invention makes possible the cold hardening of the material to which it is applied, the material being ready for use as from the fourth day of its production.

The material treated with the compositon of the present invention requires only 3 days of drying at ambient temperature, there being no necessity for any type of drying by the application of heat.

It is worth noting that the material thus obtained does not undergo any type of alteration, cracking or modification to its original form when subjected to temperatures of from $25^{\circ}C$ below zero to $300^{\circ}C$ above zero. Neither do alterations of any sort occur when the material treated with the composition of the present invention is exposed to temperatures of $300^{\circ}C$ and them immediately to temperatures as low as $25^{\circ}C$ below zero.

The material can be produced with or without its own lustre, this property depending on the method of manufacture employed. Neither do modifications occur in the colour imparted to the material within the heat range indicated above, the pigment used being incorporated into the mass of the material, for which reason discoloration due to wear

7.

0036700

or weathering is not observed.

The material treated with the composition of the invention does not exude or absorb moisture; it is totally non-inflammable.

Furthermore, because no heat is required for its drying, the production of pieces of various sizes shapes or reliefs is possible, without any limitation.

The materials to which the industrial product of the present invention is applied may be produced by extrusion, casting with or without pressure, rolling, moulding, injection, vacuum or blowtorch injection, it being possible for the product of the invention to be incorporated in liquid, solid or semi-solid form, the physical state of the product depending on or being adapted to the type of mechanical process chosen for the manufacture of said material.

To illustrate the applications of the composition of the present invention, there are given below some examples of the manufacture of materials to which the composition is applied:

EXAMPLE A

Method of production by extrusion.

A) Plain tiles for roofs.

A material is used consisting of:

| | |
|---|---|
| red clay or kaolin | 250 g |
| calcined magnesium oxide | 200 g |
| impalpable quartz | 100 g |
| ground mica | 10 g |
| colouring pigments | 10 g |
| thin wood chippings (of any type) | 25 g |

composition of the present invention based on magnesium salts                        165 g

All the dry substances were suitably mixed in a mixer. Half the amount of the composition of the present invention was poured into a blade-type kneaning machine and all the previously mixed ingredients were poured thereon; the remainder of the composition of the invention was then incorporated therein.

The kneading operation lasted between 5 and 15 minutes, the time depending on the consistency to be acquired by the material.

After the kneading, the mass was tipped into the extruder and by means of extrusion the intended piece was produced. Once manufactured, the piece had to be left for 3 days at ambient temperature for drying.

B) Coverings in general.

The materials used and the quantities thereof were the same as those indicated in (A) above, with 25 g of abrasives being added thereto.

The method of production is the same as that described above.

C) Facing or lining bricks (ceramic type).

The materials used and the quantities thereof were as follows:-

9.

0036700

| | |
|---|---|
| calcined magnesium xodie | 200 g |
| volcanic or allartie lava | 300 g |
| argillaceous earth | 200 g |
| colouring pigments | 20 g |
| kaolin | 100 g |
| composition of the present invention based on magnesium salts | 165 g |

The method of production was the same as that described under A) above.

EXAMPLE B

Method of production by pressing.

A) Plain tiles for roofs.

The following materials were used in the quantities indicated:

| | |
|---|---|
| calcined magnesium oxide | 200 g |
| red clay or kaolin | 200 g |
| impalpable quartz | 100 g |
| ground mica | 10 g |
| colouring pigments | 10 g |
| thin wood chippings (of any type) | 20 g |
| composition of the present invention based on magnesium salts | 100 g |

All the dry substances were suitably mixed in a mixer; half the composition of the present invention was poured into a blade-type kneading machine and all the previously mixed dry substances were poured thereon.

During the kneading operation the remainder of the composition of the invention was poured in, the kneading operation lasting for a period of from 5 to 7 minutes.

When the kneading had ended, the mass obtained was tipped into a mould similar to those used in the ceramics industry and then the mould was subjected in a press to a maximum pressure of 400 kg/cm$^2$, after which the mould was withdrawn from the press and the element thus obtained was removed therefrom.

B) Coverings in general

Identical components and quantities thereof were used as those given in (A) above, but incorporating in addition 25 g of abrasives. The production process was the same as in (A) above.

C) Facing or lining bricks (ceramic type)

The materials used and their corresponding quantities were as follows:

| | |
|---|---|
| calcined magnesium oxide | 200 g |
| volcanic or allarite lava | 300 g |
| argillaceous earth | 200 g |
| colouring pigments | 20 g |

product of the invention
comprising magnesium salts        150 g

The production of the bricks was effected in accordance with the method described in (A) above.

Exactly identical results were obtained if, instead of using in the preceding formulations a composition of the present invention based on magnesium salts, its counterpart based on calcium salts was added.

Tests have been carried out with imitation-wood material treated with the product forming the subject-matter of the present invention, these tests being set out together with the results obtained in the accompanying Tables:

TABLE I

TEST ON IMITATION-WOOD MATERIAL

All the tests were carried out on a small sample piece.

- Test for resistance to compression and determination of apparent density

| Test piece no. | 1 | 2 | 3 |
|---|---|---|---|
| Width of test piece (mm) | 20.1 | 20.1 | 20.1 |
| Thickness of test piece (mm) | 20.0 | 20.1 | 20.1 |
| Height of test piece (mm) | 60.2 | 59.8 | 60.2 |
| Sectional area ($mm^2$) | 402 | 404 | 404 |
| Maximum load attained (Kgf) | 1,590 | 2,430 | 1,930 |
| Resistance to compression ($Kgf/cm^2$) | 396 | 601 | 478 |
| Apparent density ($g/cm^3$) | 1.43 | 1.53 | 1.35 |

Determination of Rockwell hardness in accordance with
standard ASTM-D 805

Diameter of ball used                6.35 mm (1/4")

Total load applied                   100 kgf

$HR_M$ = 32 - 29 -31


-Screw-starting test in accordance with standard ASTM-D 1037 Identification of the screw used: Steel screw (c/P).

barr. Mad. 5 x 30 IRAM 5153

The screws were placed in holes perperforated with
a drill of ⌀ 3 mm, then with the value of ⌀ 2.8 mm which is
indicated by the standard. The screws were cutt off upon
fitting them.

Speed of displacement of the head:        1.5 mm/min.
Thickness of specimen used        :        35 mm
Maximum loads attained            :        323-311-374 Kgf

TABLE II

TEST OF IMITATION-WOOD MATERIAL

All the test pieces were taken from a single sample piece.

-Test for resistance to compression and determination of
apparent density

Width of test piece:             20.0 mm

Thickness of test piece          20.1 mm

Height of test piece:            59.9 mm

Sectional area:                  402 $mm^2$

Maximum load attained:           4,290 Kgf

Resistance to compression:       1,070 $Kgf/cm^2$

Apparent density: 1.81 g/cm$^3$

The test piece tested did not contain any wood chips.

## - Test for tensile strength

| | |
|---|---|
| Thickness of the test piece: | 11.7 mm |
| Width of test piece: | 32.5 mm |
| Sectional area: | 380 mm$^2$ |
| Maximum load attained: | 280 Kgf |
| Tensile strength: | 73.7 Kgf/cm$^2$ |

## - Bending test

| | |
|---|---|
| Width of the section: | 20.8 mm |
| Height of the section: | 20.8 mm |
| Distance between supports: | 280 mm |
| Load at the limit of proportion-lity | 32.5 Kgf |
| Tension at the limit of proportionality | 152 Kgf/cm$^2$ |
| Deflection at the limit of proportionality | 0.72 mm |
| Maximum load attained | 77.3 Kgf |
| Modulus of rupture under bending: | 361 Kgf/cm$^2$ |
| Apparent density | 1.44 g/cm |

The data set out above clearly demonstrate the notable properties of mechanical strength offered by the materials treated with the composition of the present invention.

0036700

CLAIMS

1. A composition for the cold hardening or conglutination of materials, which comprises a liquid component formed by a neutral aqueous solution of a chloride of magnesium or calcium, stabilised with an aqueous solution of a sulphate of the same metal and a solid component formed by an oxide of the metal corresponding to the chloride and sulphate.

2. A composition as claimed in claim 1 wherein the chloride used in analytically pure and the water used to obtain the solutions is chemically pure and free of salts.

3. A composition as claimed in claim 1 or claim 2 wherein the components of the composition are present in the following proportions:

| | |
|---|---|
| magnesium or calcium chloride | 600-800 parts by weight |
| water | 900-1100 parts by weight |
| aqueous solution of magnesium or calcium sulphate | S-15 parts by weight |
| magnesium or calcium oxide | 900-1100 parts by weight. |

4. A composition as claimed in any one of the preceding claims wherein the aqueous solution of magnesium or calcium sulphate contains from 3 to 8 grammes of the salt per 10 cc of water.

5. A process for the preparation of a composition as claimed in claim 1, which process comprises dissolving the magnesium or calcium chloride in water; leaving the solution to stand for at least 24 hours; then adding the aqueous solution of magnesium or calcium sulphate; stirring the resultant solution and leaving it to stand for at least 4 hours; filtering and adding to the filtrate the magnesium or calcium oxide in powdered form.

6. A process as claimed in claim 5 wherein the magnesium or calcium chloride used is analytically pure and the water used is chemically pure and free of salts.

7. The use of a composition as claimed in claim 1 for the cold hardening or conglutination of materials.

SJA/EA 319

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | US - A - 1 838 147 (LUKENS et al.)<br><br>* Page 1, lines 47-55; 71-85; claims 1-3 *<br>--- | 1,3,5,7 | C 04 B 17/00 |
| X | US - A - 2 526 837 (WOODWARD)<br><br>* Column 4, table I; column 5, table IV; claim 1 *<br>--- | 1,3,5,7 | |
| X | US - A - 2 383 609 (NAT. CASKET CORP. INC.)<br><br>* Claim 1; pages 2,3; tables * <br>--- | 1,3 | |
| X | DE - C - 804 536 (DOLOMITWERKE GmbH)<br><br>* Claim 1; example I *<br>--------- | 1,3,5,7 | |

**TECHNICAL FIELDS SEARCHED (Int. Cl.³)**

C 04 B 17/00
17/03
17/05
17/06

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 18.05.1981 | STANGE |